**Europäisches Patentamt**

(19) **European Patent Office**

**Office européen des brevets**

(11) Publication number: **0 111 689**
**A2**

(12) **EUROPEAN PATENT APPLICATION**

(21) Application number: **83110683.6**

(22) Date of filing: **26.10.83**

(51) Int. Cl.³: **G 06 F 15/40**

(30) Priority: **21.12.82 US 451951**

(43) Date of publication of application:
**27.06.84 Bulletin 84/26**

(84) Designated Contracting States:
**DE FR GB IT**

(71) Applicant: **International Business Machines Corporation**
**Old Orchard Road**
**Armonk, N.Y. 10504(US)**

(72) Inventor: **Fritz, David H.**
**77 Pascal Lane**
**Austin Texas 78746(US)**

(74) Representative: **Bonneau, Gérard**
**Compagnie IBM France Département de Propriété**
**Industrielle**
**F-06610 La Gaude(FR)**

(54) **Method of storing a B-tree type index file on rotating media devices.**

(57) Index data is organized in main storage and on cyclically addressable media device such as diskette, disk or drum so that addresses of any index entry in the index is accomplished with one access mechanism seek plus on the average of one rotation of the media. The lowest two levels of the index structure are stored on the media device such that a next to the lowest level node and its related leaf nodes are cyclically addressable. The higher level of the index structure is organized as a B-tree index and stored in the main storage.

FIG. 2

1

# METHOD OF STORING A B-TREE TYPE INDEX FILE
## ON ROTATING MEDIA DEVICES

The subject invention generally relates to file organizations for computer systems, and more particularly to a method of storing a B-tree index file structure which is especially well adapted for use with cyclically addressable media such as diskette, disk or drum.

R. Bayer and E. McCreight in an article entitled "Organization and Maintainance of Large Ordered Indexes," published in Acta Inf., 1, 3 (1972), pp. 173-189, proposed an external file index mechanism with relatively low cost which they called a B-tree. The basic B-tree data structure can be considered to be a generalization of the binary search tree in which more than two paths leave a given node. In general, each node in a B-tree of order d contains at most 2d keys and 2d+1 pointers and at least d keys and d+1 pointers. The maintenance algorithms for B-trees permit insertion and deletion of records in ways that always leave the tree balanced thereby assuring that the longest path in a B-tree of n keys contains at most about $\log_d n$ nodes where d is the order of the B-tree. In a find operation, each visit to a node requires a secondary storage access. Therefore, by balancing the B-tree, large overhead savings are possible. When an insertion is performed, balance is restored by a procedure which moves from the leaf back toward the root. If the leaf can accomodate another key, the new key is simply inserted. But if the appropriate leaf is already full, then a split occurs dividing the node and promoting one of the keys to the parent node as a separator. If the parent node can accomodate an additional key, the insertion process terminates. But if the parent node is also full, the same splitting process is performed and so on. The deletion process can produce the opposite result requiring a concatenation of neighboring nodes. When two nodes are combined into one, the key separating the two nodes in the parent node is no longer necessary, and so this key is added to the concatenated node.

For more information on B-trees and their variants, reference is made to D. Knuth, The Art of Computer Programming, Vol. 3 : Sorting and Searching, Addison-Wesley Pub. Co. (1973). A good summary discussion of B-trees is presented by D. Comer in "The Ubiquitous B-Tree," published in Computing Surveys, 11, 2 (June 1979), pp. 121-137.

There are applications were users wish to view a file sequentially using the next operation to process all records in key-sequence order. A B-tree structure may not do well in such a sequential processing environment. One alternative to B-tree structure may not do well in such a sequential processing environment. One alternative to B-trees is the Indexed Sequential Access Method (ISAM) which is described by S.Ghosh and M.Senko in an article entitled, "File Organization :On the selection of Random Access Index Points for Sequential Files", published in J.ACM, 16, 4 (Oct. 1969), pp. 569-579.

It is an object of the present invention to provide a method organizing index data in main storage and on cyclically addressable media such as diskette, disk or drum, and together with a computer program to traverse the index, accesses any index entry in the index with one access mechanism seek plus on the average of one rotation of the media. This is accomplished without index search hardware and with as few as two main storage buffers. According to the invention, a B-tree type index file structure is formatted and stored in the system operating memory and bulk storage so that the lowest two levels of the structure are stored in the bulk storage and the higher levels of the structure are stored in the operating memory. The formatting and storage of the lowest two levels of the structure in the bulk storage is such that a next to the lowest level node and its related nodes are cyclically addressable without movement of an access mechanism. The invention represents an improvement in what are termed $B^+$-trees in the article by D. Comer referenced above. As described therein, a $B^+$-tree, has an independent index set, which is a B-tree, and a linked set of leaves referred to as a sequence set wherein all the keys reside. In this organization, operations by key begin at the root as in a B-tree, and sequential processing begins at one end of the sequence set. This organization has the accessing advantages of a B-tree and at the same time allows easy sequential processing. The improvement according to the invention is to apply the $B^+$-tree structure to cyclically addressed bulk storage media by organizing the sequence set in such a manner that, on the average, only one rotation of the media is required. This is in contrast to the conventional $B^+$-tree structure wherein the nodes of the lowest level of the structure are randomly allocated and the sequence set as well as the index set may both reside in system operating memory. The basic principles of the invention can furthermore be recursively applied for succeeding pairs of levels.

The invention will now be described in reference to the following drawings wherein :

Figure 1 is a schematic representation of a conventional $B^+$-tree structure.

Figure 2 is a diagramatic illustration of the lowest two levels of the structure in bulk storage according to a specific example of the subject invention.

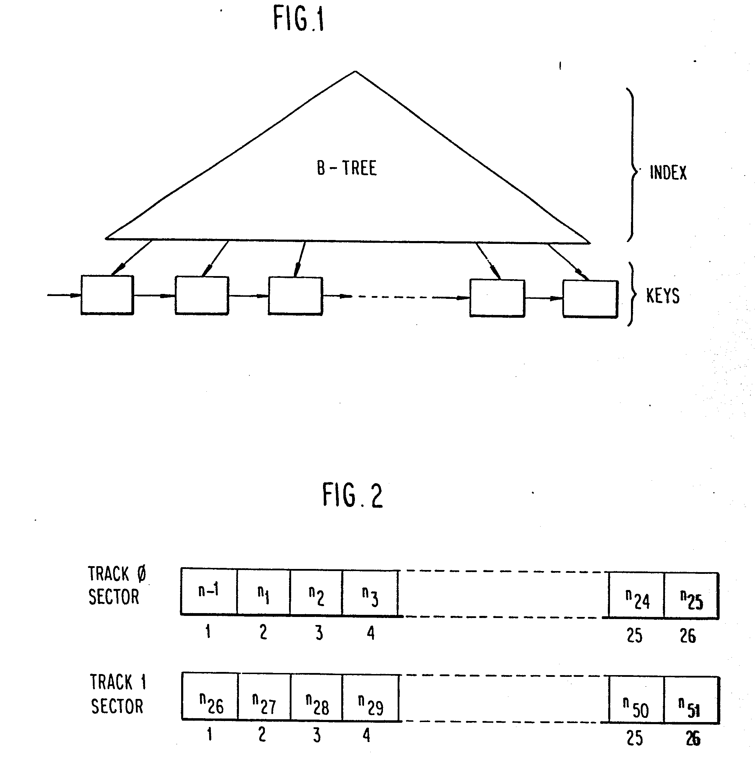

Referring now to the drawing and more particularly to figure 1, there is shown a $B^+$-tree which is characterized by the separation of the index and a sequence of keys. The index is a B-tree and need not contain actual keys but may contain only separators. Searching proceeds from the root of the $B^+$-tree through the index to a leaf. The $B^+$-tree retains the logarithmic cost properties for operations by key but gains the advantage of requiring at most one access to satisfy the next operation. During the sequential processing of a file, no node will be accessed more than once.

The present invention is best illustrated by way of example. Consider a diskette media with the following characteristics : (1) two tracks per cylinder, (2) twenty-six sectors per track, and (3) 512 bytes per sector. Each next-to-the-lowest level index node (level n-1) and its related leaf (level n) are assigned to a cylinder as depicted in Figure 2. Each node at level n-1 can index 51 nodes at level n with index elements of ten bytes comprising, for example, eight bytes of key and two bytes of pointer. A three level index with one 512 byte root node resident in system memory can index $51^3$ items or over 100,000 items, with an access time for one seek plus an average of one revolution plus one record time.

A computer programmed establishment of the index structure according to the invention involves the following steps :

1) Determine d, the number of key/pointer pairs per index node.

2) Allocate d+1 contiguous nodes on the media.

3) Read the keys and pointers of the objects to be indexed in collating sequence and build the current lowest level of the index, the first node in the second preallocated node and the $d^{th}$ in the $d+1^{st}$.

4) Build the next higher level node in the first preallocated node. This node contains d key/pointer pairs, one pair for indexing each of the lower level nodes built in step 3 above.

5) For the remaining keys, perform steps 1 to 4 repetitively until all objects are indexed.

6) The last time step 4 is performed, only as many nodes as were built on this iteration are indexed in step 4.

7) Build the higher level indexes as follows :

a) If steps 1 to 4 were repeated <d times, build a root index, but

b) If steps 1 to 4 were repeated >d times, recursively perform this entire procedure again optimumly indexing the previous "leaf" level.

In the process set forth above, it is possible for the procedure to terminate in step 4 if only a single next higher node is built. On the other hand, as indicated in step 7b, the process may be recursively applied for succeeding pairs of levels. What particularly characterizes the invention is that the lowest two levels of the index structure are stored on a rotating media device and the nodes have a non-random order such that a next to the lowest level node and its related leaf nodes are cyclically addressable. This structure provides rapid processor retrieval because only one access mechanism seek and on the average one rotation of the media are required.

## Claims

1. A method of storing a B-tree type index file structure in an operating memory and on a rotating media device in order to facilitate rapid retrieval of an index, characterized in that it comprises the steps of :

   storing the lowest two levels of said structure in said rotating media devicesuch that a next to the lowest level node and its related leaf nodes are cyclically addressable ; and

   storing a higher level of said structure in said operating memory.

2. The method according to claim 1 characterized by the steps of :

   determining d, the number of key/pointer pairs per index node ;

   allocating d+1 contiguous nodes on said rotating media device ;

   reading the keys and pointers of the object to be indexed in collating sequence and building the current lowest level of the index, the first node in the second preallocated node and the $d^{th}$ in the $d+1^{st}$ ;

   building the next higher level node in the first preallocated node ;

   for the remaining keys, performing the first four steps repetitively until all objects are indexed.

3. The method according to Claim 2 characterized in that it further comprises the steps of :

0111689

if the first four steps were repeated $<d$ times, building a root index, but

if the first four steps were repeated $\geq d$ times, recursively performing the entire procedure again optimumly indexing the previous "leaf" level.

1/1

0111689

FIG.1

B − TREE

INDEX

KEYS

FIG.2

TRACK Ø SECTOR: $n_{-1}$ (1), $n_1$ (2), $n_2$ (3), $n_3$ (4), ..., $n_{24}$ (25), $n_{25}$ (26)

TRACK 1 SECTOR: $n_{26}$ (1), $n_{27}$ (2), $n_{28}$ (3), $n_{29}$ (4), ..., $n_{50}$ (25), $n_{51}$ (26)